# EUROPEAN PATENT APPLICATION

(11) **EP 4 534 354 A1**
(43) Date of publication of application: **09.04.2025**
(21) Application number: 24204329.7
(22) Date of filing: 02.10.2024
(51) Int. Cl.: B60R 3/02, B62D 35/00

(54) **A HEAVY GOODS VEHICLE**

(30) Priority: 03.10.2023 NL 2035945
(71) Applicant: DAF Trucks N.V., 5643 TW Eindhoven (NL)
(72) Inventor: WILLEMS, Bart Jacobus Martinus, 5643 TW Eindhoven (NL)
(74) Representative: V.O.

(57) **Abstract**

A heavy goods vehicle (1) comprises a chassis (2), front wheels (3), a driver cabin (4) having a cabin rear wall (5) mounted on the chassis. Behind the cabin rear wall an area (A) positioned above the chassis is present. On at least one side of it, the heavy goods vehicle has a side panel (6) extending rearwards from behind a first front wheel in the heavy goods vehicle's longitudinal direction and being configured for at least partly delineating laterally a space which is situated under the chassis. The side panel is provided with a side step (7) for allowing access to the area behind the cabin rear wall. The side panel is provided with a fixed elongate element (8) fixedly attached to an upper edge thereof and which extends in longitudinal direction along the upper edge of the side panel. Above the side step the fixed elongate element is absent for creating an access passage to the area behind the cabin rear wall. A moveable skirt (9) is arranged above the side step and is configured to be moved in an active position in which it is flush with and coextends with the fixed elongate element for obstructing the access passage to the area behind the cabin rear wall and in an inactive position in which it clears the passage to the area behind the cabin rear wall.

## Description

The invention relates to a heavy goods vehicle comprising a chassis, front wheels, a driver cabin having a cabin rear wall mounted on the chassis and an area behind the cabin rear wall, the area being positioned above the chassis, the heavy goods vehicle on at least one side of it, having a side panel extending rearwards from behind a first front wheel in the heavy goods vehicle's longitudinal direction and being configured for at least partly delineating laterally a space which is situated under the chassis, wherein the side panel is provided with a side step for allowing access to the area behind the cabin rear wall.

Such a heavy goods vehicle is for example known from WO2014/163555A1. In this known heavy goods vehicle the side panel comprises an elongate element which is configured to extend in the heavy goods vehicle's longitudinal direction and to being movable relative to said side panel. The elongate element is moveable by a movement means between at least one active position in which, in the heavy goods vehicle's working state, it at least partly bridges the distance between an upper edge of the side panel and a lower edge of a semitrailer and thereby serves as an upward continuation of the side panel, and an at least partly inactive position in which its upper boundary is at a greater distance from said lower edge of the semitrailer than in the active position. The side panel is for the most part rigid and strong enough to be provided with a side step or foothold to be used by a driver of the vehicle wishing to access the area situated behind the driving cabin. In this known heavy goods vehicle in normal operation of the vehicle, i.e. towing a semitrailer, the elongate element can be in the active position and can thereby reduce the air resistance of the vehicle combination and hence the fuel consumption of the vehicle, while the elongate element can be in the inactive position, e.g. during marshalling and when negotiating ferry ramps, without risk of the semitrailer's lower edge fouling the elongate element. In addition, the elongate element is with advantage moved to the inactive position to allow access for refueling and for climbing up and down the vehicle's side step.

It is an object of the present invention to provide a heavy goods vehicle in which the side panel is provided with an elongate element that is able to reduce air resistance even when the heavy goods vehicle is driving at very low speeds while at the same time being able to provide access passage to the area behind the cabin rear wall in cases when this is desired.

According to the invention this object is obtained by providing a heavy goods vehicle comprising a chassis, front wheels, a driver cabin having a cabin rear wall mounted on the chassis and an area behind the cabin rear wall, the area being positioned above the chassis, the heavy goods vehicle on at least one side of it, having a side panel extending rearwards from behind a first front wheel in the heavy goods vehicle's longitudinal direction and being configured for at least partly delineating laterally a space which is situated under the chassis, wherein the side panel is provided with a side step for allowing access to the area behind the cabin rear wall, characterized in that the side panel is provided with a fixed elongate element fixedly attached to an upper edge thereof and extending in longitudinal direction along the upper edge of the side panel, wherein above the side step the fixed elongate element is absent for creating an access passage to the area behind the cabin rear wall, and in that a moveable skirt is arranged above the side step, the moveable skirt being configured to be moved in an active position in which it is flush with and coextends with the fixed elongate element for obstructing the access passage to the area behind the cabin rear wall and in an inactive position in which it clears the passage to the area behind the cabin rear wall. By providing such a fixed elongate element with a moveable skirt arranged above the side step air resistance can be reduced by the elongate element even when the heavy goods vehicle is driving at low speeds while in the inactive position of the moveable skirt the passage to the area behind the cabin rear wall is cleared.

In an embodiment of a heavy goods vehicle according to the invention the heavy goods vehicle comprises a skirt activation unit for activating movement of the moveable skirt from the active position to the inactive position or vice versa, the skirt activation unit being manually, pneumatically, hydraulically, mechatronically or electronically operated.

In another embodiment of a heavy goods vehicle according to the invention the side step is a retractable, foldable or pivotal side step configured to be positioned in either an active position in which treads of the side step can be tread upon or an inactive position in which the treads are inaccessible. Preferably in the inactive position the treads are pivoted into a position flush with the side panel or alternative in the inactive position the treads are retracted to a position within the side panel.

In a further embodiment of a heavy goods vehicle according to the invention the heavy goods vehicle comprises a side step activation unit for activating movement of the side step from the active position to the inactive position or vice versa, the side step activation unit being manually, pneumatically, hydraulically, mechatronically or electronically operated.

In another embodiment of a heavy goods vehicle according to the invention the skirt activation unit and the side step activation unit are integrated in a common activation unit, the common activation unit being configured for activating movement of the side step from the active position to the inactive position, or vice versa, while simultaneously activating movement of the moveable skirt from the inactive position to the active position, or vice versa.

In a still further embodiment of a heavy goods vehicle according to the invention the heavy goods vehicle is, on at least one side of it, provided with a side fender pivotably attached along and extending rearwards of a vertical side edge of the cabin rear wall.

In a yet further embodiment of a heavy goods vehicle according to the invention the fixed elongate element is a flexible element.

The invention is in particular suitable when the heavy goods vehicle's chassis comprises a fifth wheel for allowing coupling of a semi-trailer or when the heavy goods vehicle comprises a body builder box positioned on the chassis behind the area behind the cabin rear wall.

The invention will be further explained with reference to the Figures, in which a non-limiting exemplary embodiment of according to the invention is shown:
Fig. 1 schematically shows an embodiment of a heavy goods vehicle according to the invention in a situation where the moveable skirt is in its inactive position;
Fig. 2 schematically shows the heavy goods vehicle as shown in Figure 1 in a situation where the moveable skirt is in its active position;
Figs. 3A and B schematically in side cross-section show an embodiment of a heavy goods vehicle according to the invention in which a common activation unit has positioned the side step in its inactive position and the moveable side skirt in its active position (Fig. 3A) respectively the side step in its active position and the moveable side skirt in its in active position (Fig. 3B) by a linear movement of the side step treads;
Figs. 4A and B schematically in side cross-section show an embodiment of a heavy goods vehicle according to the invention in which a common activation unit has positioned the side step in its inactive position and the moveable side skirt in its active position (Fig. 4A) respectively the side step in its active position and the moveable side skirt in its inactive position (Fig. 4B) by a pivotal movement of the side step treads; and
Figs. 5A and B schematically shows the heavy goods vehicle as shown in Figure 2 provided with a side fender in active position (Fig. 5A) and inactive position (Fig. 5B).

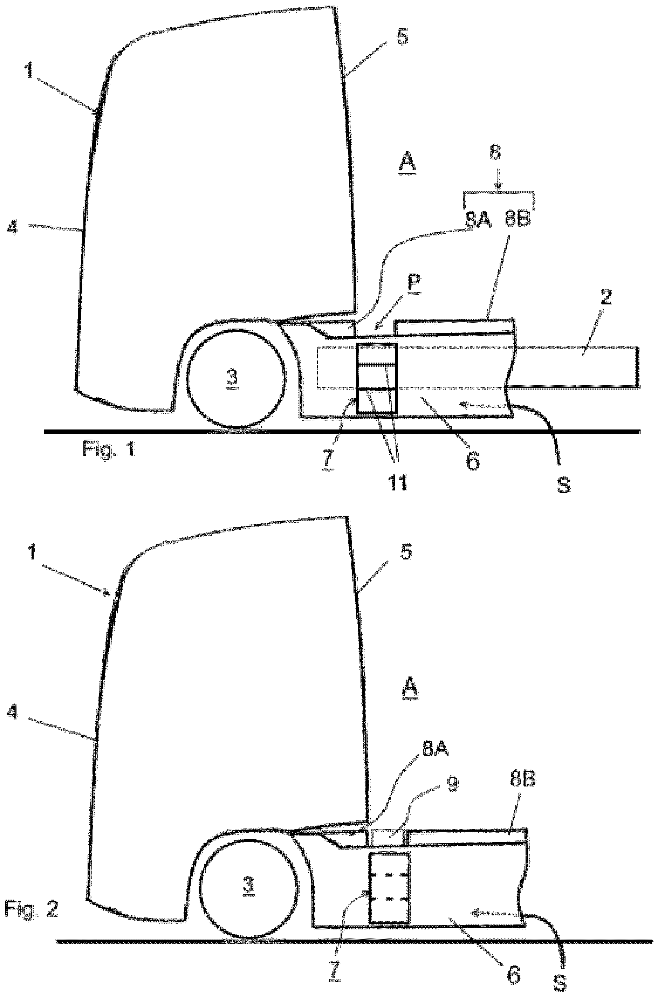

In Fig. 1 an embodiment of a heavy goods vehicle 1 according to the invention is shown schematically. The heavy goods vehicle 1 comprises a chassis 2 and front wheels 3. A driver cabin 4 with a cabin rear wall 5 is mounted on the chassis 2. Behind the cabin rear wall 5 an area A positioned above the chassis 2 is present. On at least one side of it the heavy goods vehicle 1 has a side panel 6 that extending rearwards from behind a first front wheel 3 in the heavy goods vehicle's longitudinal direction. The side panel 6 is configured for at least partly delineating laterally a space S which is situated under the chassis 2. In the side panel 6 a side step 7 is provided for allowing access via the extracted or unfolded treads 11 to the area A behind the cabin rear wall 5 when positioned in active position.

The side panel 6 is provided with a fixed elongate element 8 (in the shown embodiments comprising a front part 8A and a rear part 8B) fixedly attached to an upper edge of the side panel 6 and extending in longitudinal direction along this upper edge of the side panel 6. Immediately above the side step 7 the fixed elongate element is absent for creating an access passage P to the area A behind the cabin rear wall 5. The fixed elongate element 8 preferably is a flexible element so that the risk of it being damaged by e.g. a semitrailer's lower edge being reduced.

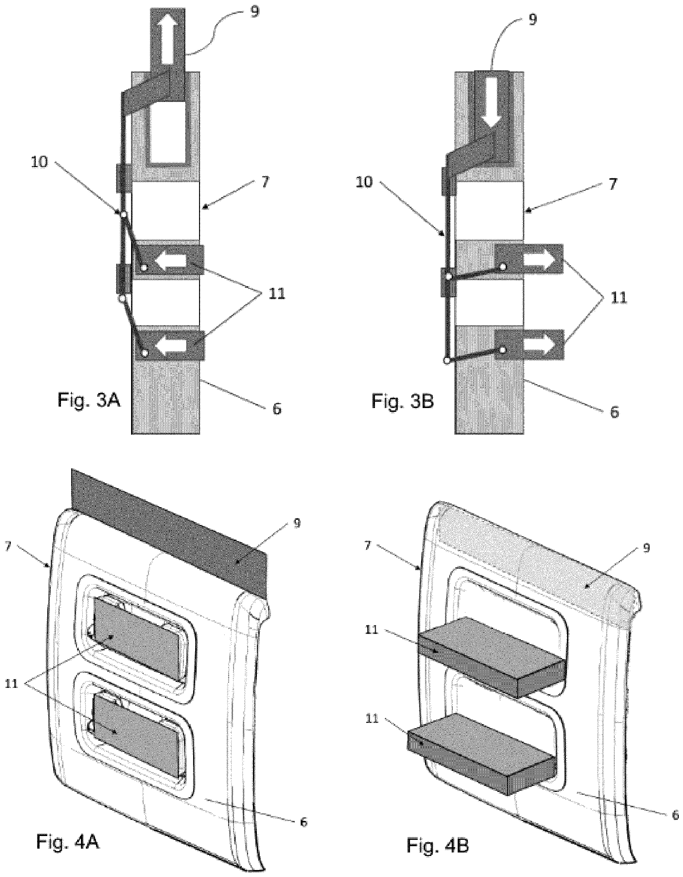

As indicated in Figure 2 and more detailed described with regards to Figures 3 and 4 a moveable skirt 9 is arranged above the side step 7. The moveable skirt 9 is configured to be moved in an active position (indicated in Figures 2, 3A, 4A and 5A) by means of pivoting, folding in or de-retracting the treads 11 in which it is flush with and coextends with the fixed elongate element 8 for obstructing the access passage P to the area A behind the cabin rear wall 5 and in an inactive position (indicated in Figures 1, 3B and 4B) in which it clears the passage P to the area A behind the cabin rear wall 5. The movement of the moveable skirt 9 from the active position to the inactive position or vice versa is controlled by a skirt activation unit 10, which can be manually, pneumatically, hydraulically, mechatronically or electronically operated.

In the embodiments shown in Figures 3A 4 the side step 7 comprises a retractable tread 11 configured to be positioned in either an active position (shown in Figures 3B) in which treads 11 of the side step 7 can be tread upon or an inactive position (shown in Figures 3A) in which the treads 11 are inaccessible. In the embodiment shown in Figures 4B in the inactive position the treads 11 are pivoted to an open position within the side panel 6 to create free access to area P. In the alternative embodiment shown in Fig. 4A in the inactive position the treads 11 are pivoted into a position flush with the side panel 6. In both embodiments (Figures 3A and 4A) the treads 11 at least substantially do not increase air resistance when the heavy goods vehicle is driving.

Although the heavy goods vehicle 1 could comprises a side step activation unit for activating movement of the side step 7 from the active position to the inactive position or vice versa, which side step activation unit being manually, pneumatically, hydraulically, mechatronically or electronically operated, which side step activation unit is separate from the skirt activation unit 10, in the embodiment shown in Figure 3 the skirt activation unit and the side step activation unit are integrated in a common activation unit 10. This common activation unit 10 is configured for activating movement of the side step 7 from the active position to the inactive position, or vice versa, while simultaneously activating movement of the moveable skirt 9 from the inactive position to the active position, or vice versa.

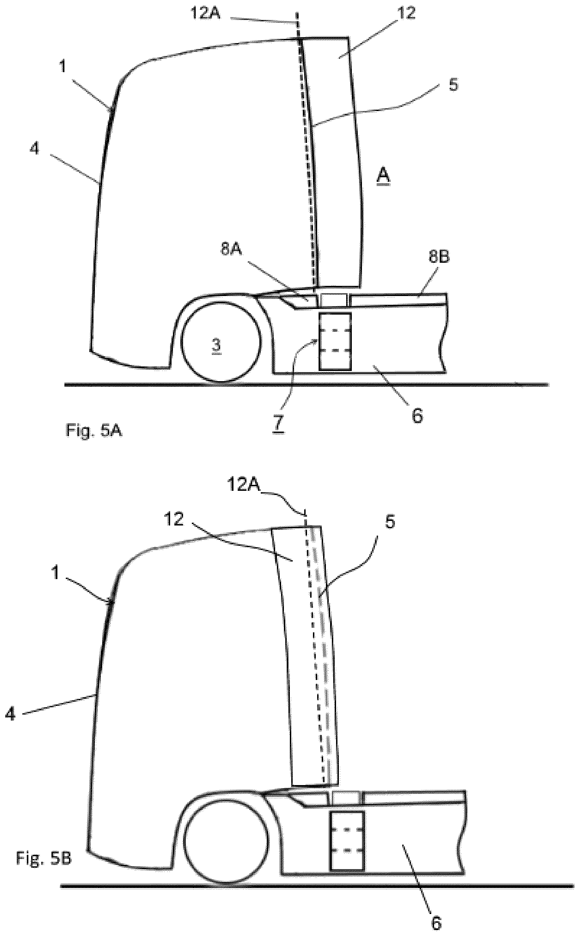

In the embodiment of the heavy goods vehicle 1 shown in Figure 5A the heavy goods vehicle 1 is, on at least one side of it, provided with a side fender 12 pivotably attached on a pivot axis 12A along and extending rearwards of a vertical side edge of the cabin rear wall 5.

The invention is applicable to both a heavy goods vehicle of which the chassis comprises a fifth wheel for allowing coupling of a semi-trailer and to a heavy goods vehicle comprising a body builder box rigidly positioned on the chassis behind the area A behind the cabin rear wall 5.

## Claims

1. A heavy goods vehicle comprising a chassis, front wheels, a driver cabin having a cabin rear wall mounted on the chassis and an area behind the cabin rear wall, the area being positioned above the chassis, the heavy goods vehicle on at least one side of it, having a side panel extending rearwards from behind a first front wheel in the heavy goods vehicle's longitudinal direction and being configured for at least partly delineating laterally a space which is situated under the chassis, wherein the side panel is provided with a side step for allowing access to the area behind the cabin rear wall, **characterized in that** the side panel is provided with a fixed elongate element fixedly attached to an upper edge thereof and extending in longitudinal direction along the upper edge of the side panel, wherein above the side step the fixed elongate element is absent for creating an access passage to the area behind the cabin rear wall, and **in that** a moveable skirt is arranged above the side step, the moveable skirt being configured to be moved in an active position in which it is flush with and coextends with the fixed elongate element for obstructing the access passage to the area behind the cabin rear wall and in an inactive position in which it clears the passage to the area behind the cabin rear wall.

2. A heavy goods vehicle according to claim 1, wherein the heavy goods vehicle comprises a skirt activation unit for activating movement of the moveable skirt from the active position to the inactive position or vice versa, the skirt activation unit being manually, pneumatically, hydraulically, mechatronically or electronically operated.

3. A heavy goods vehicle according to claim 1 or 2, wherein the side step is a retractable, foldable or pivotal side step configured to be positioned in either an active position in which treads of the side step can be tread upon or an inactive position in which the treads are inaccessible.

4. A heavy goods vehicle according to claim 3, wherein in the inactive position the treads are pivoted into a position flush with the side panel.

5. A heavy goods vehicle according to claim 3, wherein in the inactive position the treads are retracted to a position within the side panel.

6. A heavy goods vehicle according to claim 3, 4 or 5, wherein the heavy goods vehicle comprises a side step activation unit for activating movement of the side step from the active position to the inactive position or vice versa, the side step activation unit being manually, pneumatically, hydraulically, mechatronically or electronically operated.

7. A heavy goods vehicle according to claims 2 and 6, wherein the skirt activation unit and the side step activation unit are integrated in a common activation unit, the common activation unit being configured for activating movement of the side step from the active position to the inactive position, or vice versa, while simultaneously activating movement of the moveable skirt from the inactive position to the active position, or vice versa.

8. A heavy goods vehicle according to any one of the preceding claims, wherein the heavy goods vehicle is, on at least one side of it, provided with a side fender pivotably attached along and extending rearwards of a vertical side edge of the cabin rear wall.

9. A heavy goods vehicle according to any one of the preceding claims, wherein the fixed elongate element is a flexible element.

10. A heavy goods vehicle according to any one of the preceding claims, wherein the chassis comprises a fifth wheel for allowing coupling of a semi-trailer.

11. A heavy goods vehicle according to any one of the claims 1 to 9, wherein a body builder box is positioned on the chassis behind the area behind the cabin rear wall.
